# EUROPÄISCHE PATENTSCHRIFT

(11) **EP 2 104 223 B1**
(45) Veröffentlichungstag und Bekanntmachung des Hinweises auf die Patenterteilung: **23.09.2015**
(21) Anmeldenummer: 09153021.2
(22) Anmeldetag: 17.02.2009
(51) Int. Cl.: H02P 7/29, H02P 4/00, B60H 1/00

(54) **Schaltungseinheit zur Ansteuerung eines elektronisch kommutierten Lüftermotors**
Switching unit for controlling an electronically commuted ventilation motor
Unité de commutation destinée à commander un moteur de ventilateur commuté électroniquement

(30) Priorität: 20.03.2008 DE 102008015297
(43) Veröffentlichungstag der Anmeldung: 23.09.2009
(73) Patentinhaber: Fujitsu Technology Solutions Intellectual Property GmbH, 80807 München (DE)
(72) Erfinder: Busch, Peter, 86179, Augsburg (DE)
(74) Vertreter: Epping - Hermann - Fischer

(56) Entgegenhaltungen:
- DE-A1- 3 537 403
- DE-A1- 10 318 278
- DE-U1-202006 002 766

## Beschreibung

Die Erfindung betrifft eine Schaltungseinheit zur Ansteuerung eines elektronisch kommutierten Lüftermotors mit einer Leistungsstufe zur Ansteuerung von Wicklungen des Lüftermotors und einer Steuerstufe zur Ansteuerung der Leistungsstufe. Die Erfindung betrifft weiterhin ein Lüftermodul zur Kühlung von Komponenten eines elektronischen Geräts mit einem elektronisch kommutierten Lüftermotor.

Zur Kühlung von Komponenten eines elektronischen Geräts, zum Beispiel eines Computers, werden diese Komponenten häufig auf Kühlkörpern montiert oder mit Kühlkörpern versehen, um ihre Oberfläche zur Wärmeabgabe zu vergrößern. Üblicherweise werden zur Unterstützung der Kühlung Lüfter eingesetzt, deren Luftstrom auf die Kühlkörper der temperaturkritischen Komponenten oder Bauelemente gelenkt wird. In der Regel ist es nicht notwendig, den Lüfter dauerhaft mit höchster Drehzahl zu betreiben. Im Falle von Prozessoren verlangen beispielsweise nur sehr rechenintensive Anwendungen maximale Drehzahl des Lüfters. Da eine hohe Drehzahl des Lüfters meist mit hoher Geräuschbelastung für den Anwender verbunden ist, ist es erstrebenswert, die Drehzahl des Lüfters den Erfordernissen anzupassen und so weit wie möglich zu reduzieren. Zu diesem Zweck werden häufig Steuerungen eingesetzt, die die Drehzahl des Lüfters absenken, zum Beispiel in Abhängigkeit von der Temperatur der gekühlten Komponenten.

Für den Antrieb der Lüfter werden in elektronischen Geräten häufig elektronisch kommutierte Lüftermotoren eingesetzt, die gegenüber Kollektor-kommutierten Motoren einen geräuschloseren Betrieb ermöglichen, eine höhere Laufleistung aufweisen und weniger elektromagnetische Störstrahlung emittieren. Dabei ist es marktüblich, eine Schaltungseinheit zum Ansteuern eines elektronisch kommutierten Lüftermotors mit diesem zusammen in einem Lüftermodul zu integrieren, das zum Betrieb über zwei Anschlussdrähte mit Gleichspannung versorgt werden kann.

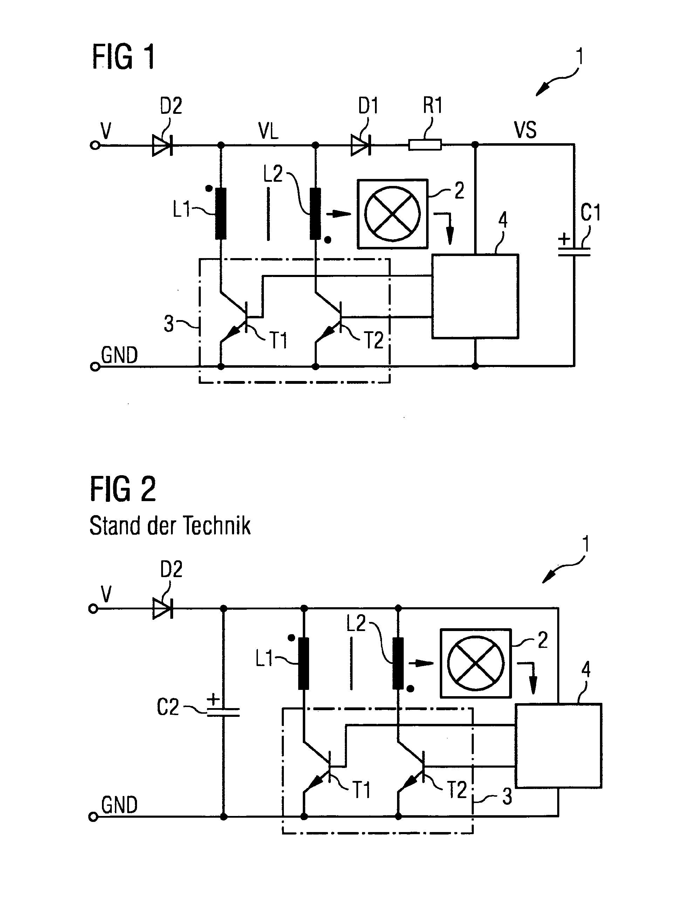

Figur 2 zeigt den schematischen Aufbau eines solchen marktüblichen Lüftermoduls nach dem Stand der Technik. Das Lüftermodul 1 umfasst einen elektronisch kommutierten Lüftermotor 2, der Wicklungen L1 und L2 aufweist, die den feststehenden Antrieb des Lüftermotors 2 darstellen. Der Übersichtlichkeit halber sind die Wicklungen L1 und L2 in der Zeichnung außerhalb des Lüftermotors 2 dargestellt. Die Wicklungen L1 und L2 werden von einer Leistungsstufe 3 angesteuert, die Transistoren T1 und T2 jeweils in Serienschaltung zu den Wicklungen L1 und L2 aufweist. Die Leistungsstufe 3 wird von einer Steuerstufe 4 angesteuert, die durch abwechselndes Einschalten der Transistoren T1 und T2 ein umlaufendes Magnetfeld des Stators erzeugt, von dem im Lüftermotor 2 ein Rotor mit Permanentmagnet mitbewegt wird. Vom Rotor werden Lüfterflügel angetrieben. Die Steuerstufe 4 weist üblicherweise einen Magnetsensor auf, der die Drehstellung des Rotors erfasst, so dass die Leistungsstufe 3 entsprechend der detektierten Stellung des Rotors ansteuert werden kann. Häufig ist die Steuerstufe 4 in kompakter Bauweise einschließlich des Magnetsensors als integrierte Schaltung ausgeführt. Weiterhin ist bekannt, die Leistungsstufe 3 zusammen mit der Steuerstufe 4 in einem gemeinsamen Gehäuse zu integrieren. Als weitere Komponenten weist das Lüftermodul 1 üblicherweise noch eine in Serie mit der Leistungsstufe und der Steuerstufe angeordnete Diode D2 als Verpolungsschutz und einen parallel zur Betriebsspannung von Leistungsstufe und Steuerstufe angeordneten Kondensator C2 zur Glättung der Betriebsspannung auf.

Zur Steuerung des Drehzahl des Lüftermotors 2 des Lüftermoduls 1 kann vorgesehen sein, die Betriebsspannung des Lüftermoduls 1 mittels eines Längsregelelements zu verringern. Der bei Verringerung der Betriebsspannung des Lüftermoduls 1 am Längsregelelement auftretende Spannungsabfall führt jedoch nachteilig zum Auftreten von Verlustleistung am Längsregelelement, die als Wärme abgeführt werden muss.

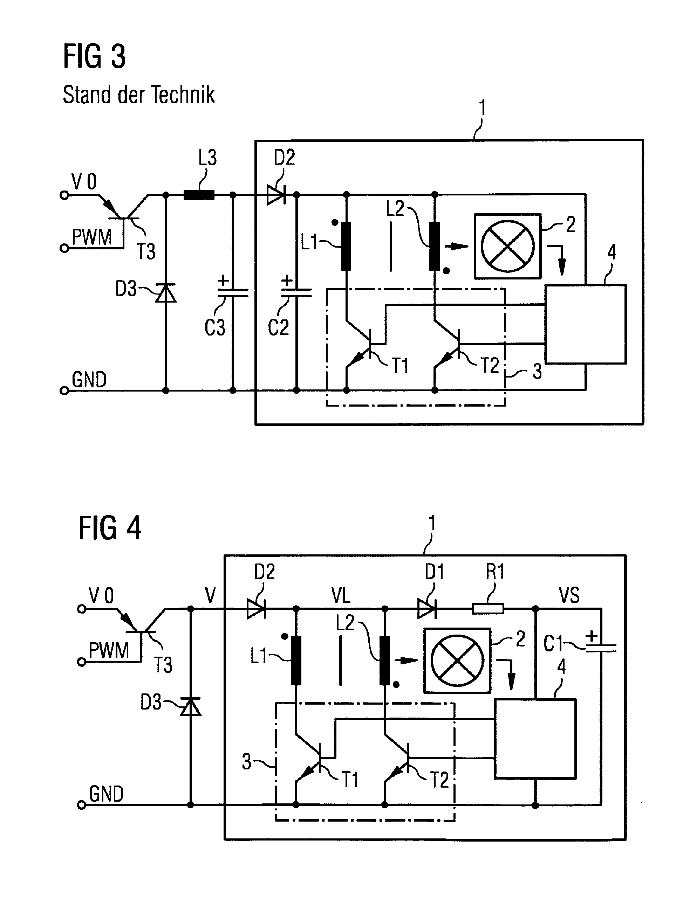

Es ist daher vorteilhafter, die Lüfterspannung über einen Gleichspannungswandler mit Pulsweitenmodulation verlustarm abzusenken, wie es zum Beispiel mit der in Figur 3 gezeigten Schaltung nach dem Stand der Technik möglich ist.

In der Schaltung nach Figur 3 wird das Lüftermodul 1 der Figur 2 über einen Gleichspannungswandler mit Strom versorgt, wobei der Gleichspannungswandler einen Schalttransistor T3, eine Spule L3, eine Freilaufdiode D3 und einen Kondensator C3 aufweist. Der Schalttransistor T3 wird mit einem rechteckförmigen pulsweitenmodulierten Signal PWM angesteuert, durch das der Schalttransistor T3 entweder ganz ein- oder ganz ausgeschaltet wird, wodurch die im Schalttransistor T3 anfallende Verlustleistung minimiert wird. Das Tastverhältnis der Pulsweitenmodulation bestimmt die Ausgangsspannung des Gleichspannungswandlers und damit auch die Drehzahl des Lüftermotors 2.

Nachteilig an dieser Art der Drehzahlsteuerung des Lüftermotors 2 eines marktüblichen Lüftermoduls 1 ist jedoch, dass neben dem Schalttransistor T3 und der Freilaufdiode D3 der aus der Spule L3 und dem Kondensator C3 bestehende Gleichspannungswandler eingesetzt werden muss, was zum einen die Kosten der Ansteuerschaltung erhöht und zum anderen mit zusätzlichem Platzbedarf, zum Beispiel auf einer Hauptplatine in einem Computer, verbunden ist.

Als weitere Möglichkeit zur Drehzahlsteuerung eines Lüftermotors ist bekannt, die Transistoren einer Leistungsstufe eines Lüftermoduls als Schaltelemente für eine Pulsweitenmodulation einzusetzen. In dem Fall ist die Steuerstufe des Lüftermoduls für eine entsprechende Ansteuerung der Leistungsstufe ausgelegt und das Lüftermodul weist neben Anschlüssen zur Bereitstellung der Betriebsspannung einen Eingang auf, an den das Signal zur Pulsweitenmodulation angelegt wird. Ein solches Lüftermodul ist jedoch wegen der aufwändigeren Innenbeschaltung, wegen des zusätzlichen Anschlussdrahts und wegen des Anschlusssteckers mit mehr Anschlüssen teurer und weniger universell einzusetzen.

Es ist daher eine Aufgabe der vorliegenden Erfindung, ein einfach aufgebautes Lüftermodul und eine entsprechende Schaltungseinheit zur Ansteuerung eines elektronisch kommutierten Lüftermotors zu beschreiben, das universell einsetzbar ist, eine möglichst geringe Zahl von Anschlüssen aufweist und das auf einfache Art pulsweitenmoduliert drehzahlgesteuert werden kann.

Diese Aufgabe wird mit einer Schaltungseinheit bzw. einem Lüftermodul mit den Merkmalen der unabhängigen Ansprüche gelöst. Ausgestaltungen und vorteilhafte Weiterbildungen der Erfindung sind in den jeweiligen abhängigen Ansprüchen angegeben.

Gemäß einem ersten Aspekt der Erfindung wird die Aufgabe gelöst durch eine Schaltungseinheit zur Ansteuerung eines elektronisch kommutierten Lüftermotors, die eine Leistungsstufe zur Ansteuerung von Wicklungen des Lüftermotors und eine Steuerstufe zur Ansteuerung der Leistungsstufe aufweist. Die Schaltungseinheit zeichnet dadurch aus, dass eine Betriebsspannung der Steuerstufe durch eine Diode von einer Betriebsspannung der Leistungsstufe getrennt ist und eine Anordnung zur Glättung der Betriebsspannung der Steuerstufe vorgesehen ist.

Die Schaltungseinheit kann vorteilhafterweise sowohl mit Gleichspannung als auch mit gepulster, zum Beispiel pulsweitenmodulierter, Gleichspannung betrieben werden. Durch die Diode und die Anordnung zur Glättung der Betriebsspannung der Steuerstufe ist in jedem Fall sichergestellt, dass die Steuerstufe nicht mit getakteter Betriebsspannung, sondern mit einer gleichstromartig geglätteten Betriebsspannung versorgt wird und keine Beeinträchtigung der Funktion der Steuerstufe auftritt. Ein Betrieb der Leistungsstufe und der Wicklungen des Lüftermotors mit einer gepulsten Betriebsspannung stellt grundsätzlich keine Beeinträchtigung der Funktion des Lüftermotors dar. Wegen des geringeren Strombedarfs der Steuerstufe gegenüber der Leistungsstufe bzw. der Wicklungen des Lüftermotors erfordert die Glättung der Betriebsspannung nur der Steuerstufe einen geringeren Aufwand als die nach dem Stand der Technik bekannte Glättung der Betriebsspannung der gesamten Schaltungseinheit. Es ergibt sich ein sowohl kostengünstigerer als auch Platz sparenderer Aufbau, der dennoch mittels Standardkomponenten, insbesondere für die Steuerstufe, realisiert werden kann.

Bevorzugt weist die Anordnung zur Glättung der Betriebsspannung der Steuerstufe einen Kondensator auf. Besonders bevorzugt weist sie zudem einen Widerstand auf und ist als Tiefpassfilter ausgeführt. Bei dieser Ausführung ergibt sich vorteilhaft eine deutliche Platz- und Kostenersparnis gegenüber einer nach dem Stand der Technik eingesetzten Glättung der Betriebsspannung der Schaltungseinheit durch einen Gleichspannungswandler bei pulsweitenmodulierter Stromversorgung.

Gemäß einem zweiten Aspekt der Erfindung wird die Aufgabe gelöst durch ein Lüftermodul für ein elektronisches Gerät, das einen elektrisch kommutierten Lüftermotor und eine Schaltungseinheit zur Ansteuerung des Lüftermotors nach dem ersten Aspekt der Erfindung aufweist. Die Vorteile entsprechen denen des ersten Aspekts.

Im Folgenden wird die Erfindung anhand von Ausführungsbeispielen mit Hilfe von Zeichnungen näher erläutert.

### Es zeigen:

- Figur 1: ein Lüftermodul mit elektronisch kommutiertem Lüftermotor und einer Schaltungseinheit zum Ansteuern des elektronisch kommutierten Lüftermotors,
- Figur 2: ein Lüftermodul nach dem Stand der Technik,
- Figur 3: das Lüftermodul gemäß Figur 2 mit einer Ansteuerschaltung zur pulsweitenmodulierten Drehzahlsteuerung,
- Figur 4: das Lüftermodul gemäß Figur 1 mit einer Ansteuerschaltung zur pulsweitenmodulierten Drehzahlsteuerung,
- Figur 5: ein Lüftermodul mit elektronisch kommutiertem Lüftermotor und einer Schaltungseinheit zum Ansteuern des elektronisch kommutierten Lüftermotors sowie eine Ansteuerschaltung zur pulsweitenmodulierten Drehzahlsteuerung und Messung des Betriebsstroms des Lüftermoduls und
- Figur 6: das Lüftermodul gemäß Figur 5 mit einer alternativen Ansteuerschaltung zur pulsweitenmodulierten Drehzahlsteuerung und Messung des Betriebsstroms des Lüftermoduls.

Figur 1 zeigt ein Lüftermodul 1 für ein elektronisches Gerät, zum Beispiel einen Computer. Das Lüftermodul 1 umfasst einen Lüftermotor 2, eine Leistungsstufe 3 und eine Steuerstufe 4. Der Lüftermotor 2 weist zwei Wicklungen L1, L2 auf, die jeweils in Serie mit einer Schaltstrecke eines Transistors T1, T2 der Leistungsstufe 3 geschaltet sind. Die Transistoren T1 und T2 werden von der Steuerstufe 4 angesteuert. Zur Stromversorgung weist das Lüftermodul 1 zwei Stromversorgungsanschlüsse auf, von denen im Betrieb einer auf Massepotenzial GND liegt und der andere mit einer Betriebsspannung V beaufschlagt wird. Es ist eine Diode D2 vorgesehen, über die die Betriebsspannung V der Leistungsstufe 3 bzw. den Wicklungen L1 und L2 als Betriebsspannung VL der Leistungsstufe zugeführt wird. Weiterhin ist eine Diode D1 und ein mit der Diode D1 serienverschalteter Widerstand R1 vorgesehen, über den die Betriebsspannung VL der Leistungsstufe 3 als Betriebsspannung VS der Steuerstufe 4 zugeführt wird. Darüber hinaus sind sowohl die Leistungsstufe 3 als auch die Steuerstufe 4 mit dem gemeinsamen Massepotenzial GND verbunden. Parallel zu Stromversorgungsanschlüssen der Steuerstufe 4 ist ein Kondensator C1 vorgesehen, der dementsprechend mit der Betriebsspannung VS der Steuerstufe 4 beaufschlagt ist.

Im Rahmen der Anmeldung ist mit der Betriebsspannung VL der Leistungsstufe 3 eine entweder an den Transistoren der Leistungsstufe 3 oder an den Wicklungen L1 und L2 anliegende Spannung bezeichnet. In allen dargestellten Ausführungsbeispielen ist jeweils ein Anschluss jeder Wicklungen L1, L2 mit der Spannung VL beaufschlagt und ein Anschluss jeden Transistors liegt auf Massepotential. Bei umgekehrter Reihenfolge der Serienschaltung von den Transistoren T1 bzw. T2 mit den entsprechenden Wicklungen L1 bzw. L2 könnte dieses jedoch gerade umgekehrt sein. Diese ist unabhängig davon, ob die Betriebsspannung V gegenüber dem als Massepotential GND bezeichneten Potential positiv oder negativ ist.

Bis auf die Diode D1, den Widerstand R1 und den Kondensator C1 entspricht der Aufbau des Lüftermoduls 1 der Figur 1 dem aus dem Stand der Technik bekannten und in Figur 2 dargestellten Aufbau. Im Unterschied zum Schaltungsaufbau der Figur 2 wird durch die Diode D1 beim Lüftermodul gemäß Figur 1 die Betriebsspannung VS der Steuerstufe 4 von der Betriebsspannung VL der Leistungsstufe 3 entkoppelt. Der Widerstand R1 und der Kondensator C1 bilden darüber hinaus einen Tiefpassfilter zur Glättung der Betriebsspannung VS. Dargestellt ist eine Situation, bei der die Diode im positiven Stromversorgungszweig vorgehen ist. Alternativ könnte die Diode D1 ebenso im negativen Stromversorgungszweig angeordnet sein.

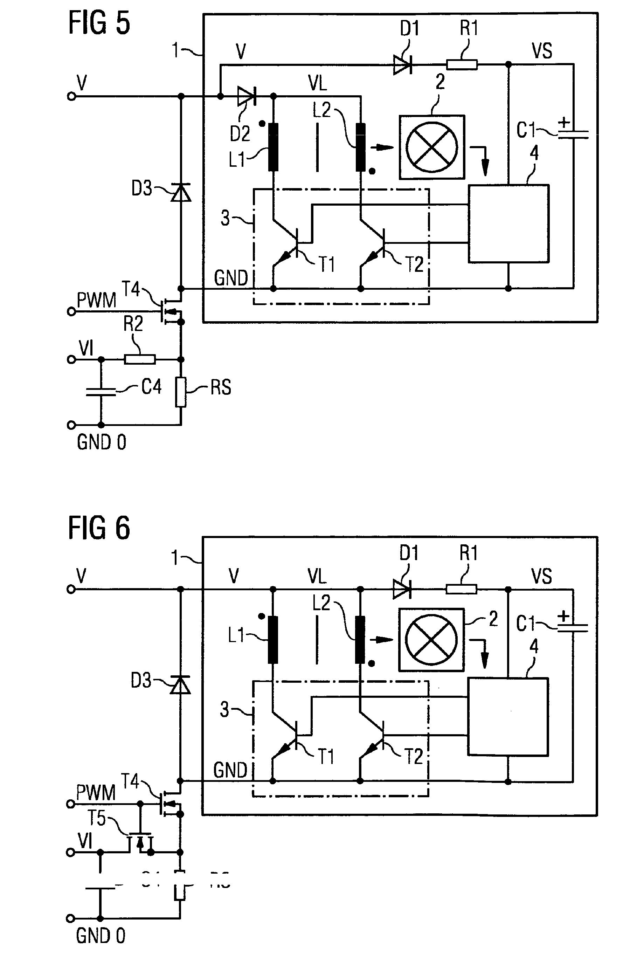

Als Lüftermotor 2, Leistungsstufe 3 und Steuerstufe 4 können im Ausführungsbeispiel der Figur 1 die marktüblichen und gemäß dem Stand der Technik eingesetzten Komponenten verwendet werden. Wird das Lüftermodul 1 der Figur 1 mit Gleichspannung betrieben, ergeben sich keine funktionellen Unterschiede zu dem Lüftermodul nach dem Stand der Technik. Da die Steuerstufe 4 üblicherweise zum Betrieb mit einer nur geringen Betriebsspannung VS ausgelegt ist, stellt der an der Diode D1 auftretende Spannungsabfall keine Einschränkung für den Betrieb des Lüftermoduls 1 dar. Sollte jedoch ein Betrieb bei besonders niedrigen Betriebsspannungen V gewünscht sein, kann zudem die in Figur 5 dargestellte Ausführungsform eingesetzt werden. In einer alternativen Ausgestaltung kann auf die Diode D2 verzichtet werden, wenn ein Verpolungsschutz für die Leistungsstufe 4 nicht benötigt wird, da zum Beispiel die Transistoren T1 und T2 im nicht angesteuerten Zustand von sich aus Strom in Gegenrichtung sperren. Aufgrund der Diode D1 ist anmeldungsgemäß die gegen Verpolung üblicherweise empfindliche Steuerstufe 4 in jedem Fall geschützt.

Die Vorteile der Schaltungsanordnung gemäß Figur 1 werden ersichtlich, wenn eine pulsweitenmodulierte Steuerung der Drehzahl des Lüftermotors 2 vorgesehen ist.

Figur 4 zeigt das Lüftermodul 1 gemäß Figur 1 mit zusätzlicher externer Beschaltung zur pulsweitenmodulierten Steuerung der Drehzahl des Lüftermotors 2. Das Lüftermodul 1 ist dabei in Serie mit einer Schaltstrecke eines Schalttransistors T3 geschaltet. In Sperrrichtung parallel zur Betriebsspannung des Lüftermoduls 1 ist eine Freilaufdiode D3 vorgesehen. Die Freilaufdiode D3 ermöglicht einen Stromfluss durch die Wicklungen L1 und L2 auch während der Austaktphase des Signals zur Pulsweitenmodulation. Zur Stromversorgung ist der Transistor T3 mit einer Betriebsspannung V0 beaufschlagt. Dem Steuereingang des Schalttransistors T3 wird ein Steuersignal zur Pulsweitenmodulation PWM zugeführt.

Im Betrieb stellt V0 die zur Versorgung der Anordnung bereitstehende Gleichspannung dar. Als Steuersignal zur Pulsweitenmodulation PWM ist ein periodisches Rechtecksignal vorgesehen, derart, dass der Schalttransistor T3 entweder vollständig durchschaltet oder sperrt. Als Taktfrequenz des Steuersignals PWM wird vorteilhafterweise eine Frequenz im Ultraschallbereich, also beispielsweise im Bereich von 30 bis 40 kHz, gewählt. Eine Änderung der Drehzahl des Lüftermotors 2 wird durch eine Variation des Tastverhältnisses, also des Verhältnisses der Zeit, die der Schalttransistor T3 innerhalb einer Periode durchgeschaltet ist, zu der Zeit, die der Schalttransistor T3 innerhalb einer Periode gesperrt ist, erreicht.

Bei pulsweitenmodulierter Ansteuerung des Schalttransistors T3 wird das Lüftermodul 1 folglich mit einer gepulsten Betriebsspannung V betrieben. Mit der Betriebsspannung V ist auch die an der Leistungsstufe 3 bzw. den Wicklungen L1 und L2 anliegende Betriebsspannung VL gepulst. Dieses ist jedoch für den Betrieb des Lüftermoduls nicht nachteilig, insbesondere dann nicht, wenn die Frequenzen der Pulsweitenmodulation über den Schaltfrequenzen der elektronischen Kommutation des Lüftermotors 2 liegen. Typische maximale Drehzahlen des Lüftermotors 2 liegen im Bereich von etwa 3000 1/min, was zu Schaltfrequenzen zur elektronischen Kommutation der Schalttransistoren T1 und T2 von 3000 1/min * 2 / 60 S/min = 100 Hz führt. Die Taktung durch eine beispielsweise im Ultraschallbereich (siehe oben) durchgeführte Pulsweitenmodulation ist somit um den Faktor 300 bis 400 höher als die Taktfrequenz der elektronischen Kommutation, wodurch sich keine Beeinträchtigung der elektronischen Kommutation durch die Pulsweitenmodulation ergibt.

Durch die Diode D1 und den aus dem Widerstand R1 und dem Kondensator C1 aufgebauten Tiefpassfilter ist jedoch gleichzeitig sichergestellt, dass die Steuerstufe 4 nicht mit getakteter Betriebsspannung VS, sondern mit einer gleichstromartig geglätteten Betriebsspannung VS versorgt wird. Dieses ist wichtig, da anderenfalls eine Beeinträchtigung der Funktion der Steuerstufe 4 auftreten könnte. Gegenüber der aus dem Stand der Technik bekannten und Figur 3 gezeigten pulsweitenmodulierten Ansteuerung eines Lüftermoduls kann bei der in Figur 4 dargestellten Schaltungsanordnung aufgrund des geänderten Aufbaus des Lüftermoduls 1 auf eine Glättung der Betriebsspannung V durch den aus der Spule L3 und dem Kondensator C3 aufgebauten Gleichspannungswandler verzichtet werden.

Da gemäß dem Ausführungsbeispiel der Figur 4 eine Glättung nur der Betriebsspannung der Steuerstufe 4 erfolgt und nicht der Betriebsspannung der Leistungsstufe 3, kann auf die Kondensatoren C2 und C3 verzichtet werden. Der demgegenüber eingesetzte Kondensator C1 kann wegen der geringeren Stromaufnahme der Steuerstufe 4 verglichen mit der Leistungsstufe 3 eine deutlich geringere Kapazität aufweisen als die Kondensatoren C2 und C3. Gegenüber der pulsweitenmodulierten Ansteuerung mit einem Lüftermodul nach dem Stand der Technik, wie in Figur 3 dargestellt, ergibt sich ein sowohl kostengünstigerer als auch Platz sparenderer Aufbau.

Figur 5 zeigt ein weiteres Ausführungsbeispiel eines Lüftermodul mit elektronisch kommutiertem Lüftermotor und einer Schaltungseinheit zum Ansteuern des elektronisch kommutierten Lüftermotors sowie eine Ansteuerschaltung zur pulsweitenmodulierten Drehzahlsteuerung und Messung des Betriebsstroms des Lüftermoduls.

Im Unterschied zu dem in Figur 1 gezeigten Lüftermodul 1 ist bei dem Ausführungsbeispiel der Figur 5 die Diode D1 mit der Betriebsspannung V und nicht der bereits durch den Spannungsabfall an der Diode D2 demgegenüber Betriebsspannung VL beaufschlagt. Die Entkopplung der Betriebsspannung VS von den Betriebsspannungen V und VL ist jedoch gleichermaßen gegeben.

Im Unterschied zum Ausführungsbeispiel der Figur 4 wird bei der Ansteuerschaltung zur pulsweitenmodulierten Drehzahlsteuerung ein Feldeffekttransistor T4 als Schalttransistor anstelle eines Bipolartransistors eingesetzt. Als weiterer Unterschied ist dieser Schalttransistor in der Massezuleitung des Lüftermoduls vorgesehen. Bei der Benutzung von Feldeffekttransistoren ist dieses vorteilhaft, da so die gegenüber p-Kanal Typen günstigeren n-Kanal Typen eingesetzt werden können. Als Folge unterscheidet sich in dieser Konstellation das an die Schaltung angelegte Massepotential GNDO von dem an dem Lüftermodul 1 anliegendem Potential GND, wohingegen die extern angelegte Betriebsspannung V mit der Betriebsspannung V des Lüftermoduls 1 übereinstimmt.

Darüberhinaus ist in Serie zur Schaltstrecke, hier der Source-Drain-Strecke, des Schalttransistors T4 ein Strommesswiderstand RS (Shunt) angeordnet, wobei eine an dem Strommesswiderstand RS abfallende Spannung über einen Widerstand R2 auf einen Kondensator C4 geleitet wird. Die an dem Kondensator C4 anliegende Spannung VI ist ein Maß für den vom Lüftermodul 1 aufgenommenen Strom I.

In Figur 6 ist eine weitere Schaltungsanordnung zur pulsweitenmodulierten Ansteuerung des Lüftermotors 2 des Lüftermoduls 1 dargestellt.

Im Unterschied zu dem in Figur 5 gezeigten Ausführungsbeispiel wurde beim Beispiel der Figur 6 auf die Diode D2 verzichtet. Der Wegfall des Spannungsabfalls an der D2 führt bei gegebener Betriebsspannung V zu einer höheren Leistung des Lüftermotors 2. Zudem ergibt sich eine Kostenersparnis.

Ein weiterer Unterschied zum Ausführungsbeispiel der Figur 5 besteht bei der Strommessung. Der Widerstand R2, über den der Kondensator C4 mit dem Messwiderstand RS verbunden ist, ist hier durch die Source-Drain-Strecke eines Feldeffekttransistors T5 ersetzt. Angesteuert wird der Transistor T5 ebenfalls vom Signal zur Pulswellenmodulation PWM, das auch den Transistor T4 steuert. Durch den Transistor T5 wird erreicht, dass der Kondensator C4 nur dann mit dem Widerstand RS verbunden ist, wenn das Lüftermodul 1 bestromt ist. Auf diese Weise wird eine beim Ausführungsbeispiel der Figur 5 auftretende Entladung des Kondensators C4 während der Zeit, in der der Transistor T4 nicht leitend geschaltet ist, verhindert. Als Folge ist die am Kondensator C4 anliegende Spannung proportional zum Strom I, der fließt, während der Transistor T4 beschaltet ist, und stellt nicht, wie beim Ausführungsbeispiel der Figur 5, den zeitlich gemittelten Strom dar. Einflüsse des Tastverhältnisses des Pulsweitenmodulationssignals PWM auf die Strommessung werden somit ausgeschaltet.

In den in den Figuren 4 bis 6 dargestellten Ausführungsbeispielen ist die Anordnung zur Pulsweitenmodulation und gegebenenfalls auch die Anordnung zur Strommessung außerhalb des Lüftermoduls 1 vorgesehen. Insbesondere da auf einen aufwändigen Gleichspannungswandler verzichtet werden kann, können die Anordnungen zur Pulsweitenmodulation und/oder zur Strommessung auch innerhalb des Lüftermoduls 1 angeordnet werden, das dann eine entsprechend größere Zahl von Anschlussdrähten aufweist.

Bezugszeichenliste
- 1: Lüftermodul
- 2: Lüftermotor
- 3: Leistungsstufe
- 4: Steuerstufe
- D1: bis D3 Dioden
- R1,: R2 Widerstände
- RS: Strommesswiderstand
- T1: bis T3 Bipolartransistoren
- T4,: T5 Feldeffekttransistoren
- C1: bis C3 Kondensatoren
- L1,: L2 Wicklungen
- L3: Spule

## Patentansprüche

1. Schaltungseinheit zur Ansteuerung eines elektronisch kommutierten Lüftermotors (2), mit
- einer Leistungsstufe (3) zur Ansteuerung von Wicklungen (L1, L2) des Lüftermotors (2) und
- einer Steuerstufe (4) zur Ansteuerung der Leistungsstufe (3),
**dadurch gekennzeichnet, dass**
- eine Diode (D1) vorgesehen ist, durch die eine Betriebsspannung (VS) der Steuerstufe (4) von einer Betriebsspannung (VL) der Leistungsstufe (3) getrennt ist und
- eine Anordnung zur Glättung der Betriebsspannung (VS) der Steuerstufe (4) vorgesehen ist.

2. Schaltungseinheit nach Anspruch 1, bei der die Anordnung zur Glättung der Betriebsspannung (VS) der Steuerstufe (4) einen Kondensator (C1) aufweist.

3. Schaltungseinheit nach Anspruch 2, bei der die Anordnung zur Glättung der Betriebsspannung (VS) der Steuerstufe (4) weiterhin einen Widerstand (R1) aufweist und als Tiefpassfilter ausgeführt ist.

4. Schaltungseinheit nach einem der Ansprüche 1 bis 3, bei der eine weitere Diode (D2) als Verpolungsschutz zwischen der Betriebsspannung (VL) der Leistungsstufe (3) und einer Betriebsspannung (V) der Schaltungseinheit vorgesehen ist.

5. Schaltungseinheit nach einem der Ansprüche 1 bis 4, bei der die Leistungsstufe Bipolartransistoren (T1, T2) oder Feldeffekttransistoren als Schaltelemente aufweist.

6. Lüftermodul (1) für ein elektronisches Gerät, aufweisend
- einen elektrisch kommutierten Lüftermotor (2) und
- eine Schaltungseinheit zur Ansteuerung des Lüftermotors (2) nach einem der Ansprüche 1 bis 5.

7. Lüftermodul (1) nach Anspruch 6, bei dem
ein Schaltelement (T3, T4) für eine pulsweitenmodulierte Drehzahlsteuerung des Lüftermotors (2) in Serienverschaltung mit der Schaltungseinheit zur Ansteuerung des Lüftermotors (2) und eine weitere Diode (D3) als Freilaufdiode in Sperrrichtung parallel zur Betriebsspannung (VL) der Leistungsstufe (3) oder der Betriebsspannung (V) der Schaltungseinheit vorgesehen sind.

8. Lüftermodul nach Anspruch 7, bei dem
das Schaltelement (T3, T4) ein Bipolartransistor oder ein Feldeffekttransistor ist.

9. Lüftermodul nach einem der Ansprüche 6 bis 8, bei dem ein Messwiderstand (RS) in Serienverschaltung mit der Schaltungseinheit zur Messung eines Stromes des Lüftermotors (2) vorgesehen ist.

10. Lüftermodul nach Anspruch 9, bei dem ein Kondensator (C4) zur Glättung einer an dem Widerstand abfallende Spannung (VI) vorgesehen ist.

11. Lüftermodul nach Anspruch 10, bei dem ein Widerstand (R2) vorgesehen ist, über den der Kondensator (C4) mit dem Messwiderstand (RS) verbunden ist.

12. Lüftermodul nach einem der Ansprüche 10 oder 11, bei dem ein weiteres Schaltelement (T5) vorgesenen ist, uber den der Kondensator (C4) mit dem Messwiderstand (RS) verbunden ist, wobei das Schaltelement (T4) und das weitere Schaltelement (T5) gemeinsam angesteuert werden.

## Claims

1. Circuit unit for actuating an electronically commutated fan motor (2), having
- a power stage (3) for actuating windings (L1, L2) of the fan motor (2) and
- a control stage (4) for actuating the power stage (3), **characterized in that**
- a diode (D1) is provided by means of which an operating voltage (VS) of the control stage (4) is isolated from an operating voltage (VL) of the power stage (3) and
- an arrangement for smoothing the operating voltage (VS) of the control stage (4) is provided.

2. Circuit unit according to Claim 1, in which the arrangement for smoothing the operating voltage (VS) of the control stage (4) has a capacitor (C1).

3. Circuit unit according to Claim 2, in which the arrangement for smoothing the operating voltage (VS) of the control stage (4) also has a resistor (R1) and is designed as a low-pass filter.

4. Circuit unit according to any of Claims 1 to 3, in which a further diode (D2) is provided as reverse polarity protection between the operating voltage (VL) of the power stage (3) and an operating voltage (V) of the circuit unit.

5. Circuit unit according to any of Claims 1 to 4, in which the power stage has bipolar transistors (T1, T2) or field-effect transistors as switch elements.

6. Fan module (1) for an electronic device, having
- an electrically commutated fan motor (2) and
- a circuit unit for actuating the fan motor (2) according to any of Claims 1 to 5.

7. Fan module (1) according to Claim 6, in which a switch element (T3, T4) for pulse-width-modulated speed control of the fan motor (2) is provided in series connection with the circuit unit for actuating the fan motor (2) and a further diode (D3) is provided as freewheeling diode in the blocking direction parallel to the operating voltage (VL) of the power stage (3) or to the operating voltage (V) of the circuit unit.

8. Fan module according to Claim 7, in which the switch element (T3, T4) is a bipolar transistor or a field-effect transistor.

9. Fan module according to any of Claims 6 to 8, in which a measurement resistor (RS) is provided in series connection with the circuit unit for measuring a current of the fan motor (2).

10. Fan module according to Claim 9, in which a capacitor (C4) is provided for smoothing a voltage (VI) dropping across the resistor.

11. Fan module according to Claim 10, in which a resistor (R2) is provided via which the capacitor (C4) is connected to the measurement resistor (RS).

12. Fan module according to either of Claims 10 and 11, in which a further switch element (T5) is provided via which the capacitor (C4) is connected to the measurement resistor (RS), wherein the switch element (T4) and the further switch element (T5) are actuated together.

## Revendications

1. Unité de commutation permettant de commander un moteur (2) de ventilateur à commutation électronique, l'unité présentant
un étage de puissance (3) qui commande les enroulements (L1, L2) du moteur (2) de ventilateur et
un étage pilote (4) qui commande l'étage de puissance (3),
**caractérisée en ce que**
une diode (D1) qui sépare la tension de service (VS) de l'étage pilote (4) de la tension de service (VL) de l'étage de puissance (3) est prévue et
**en ce qu'**un ensemble de lissage de la tension de service (VS) de l'étage pilote (4) est prévu.

2. Unité de commutation selon la revendication 1, dans laquelle l'ensemble de lissage de la tension de service (VS) de l'étage pilote (4) présente un condensateur (C1).

3. Unité de commutation selon la revendication 2, dans laquelle l'ensemble de lissage de la tension de service (VS) de l'étage pilote (4) présente en outre une résistance (R1) et est configuré comme filtre passe-bas.

4. Unité de commutation selon l'une des revendications 1 à 3, dans laquelle une autre diode (D2) est prévue en tant que protection contre l'inversion de polarité entre la tension de service (VL) de l'étage de puissance (3) et la tension de service (V) de l'unité de commutation.

5. Unité de commutation selon l'une des revendications 1 à 4, dans laquelle l'étage de puissance présente des transistors bipolaires (T1, T2) ou des transistors à effet de champ comme éléments de commutation.

6. Module de ventilateur (1) pour appareil électronique, présentant un moteur (2) de ventilateur à commutation électrique et une unité de circuit pour la commande du moteur (2) du ventilateur selon l'une des revendications 1 à 5.

7. Module de ventilateur (1) selon la revendication 6, dans lequel un élément de commutation (T3, T4) pour la commande de la vitesse de rotation du moteur (2) du ventilateur par modulation de la largeur d'impulsion est prévu dans un raccordement série sur l'unité de commutation pour la commande du moteur (2) du ventilateur et une autre diode (D3) servant de diode roue libre est prévue dans une direction de blocage parallèle à la tension de service (VL) de l'étage de puissance (3) ou de la tension de service (V) de l'unité de commutation.

8. Module de ventilation selon la revendication 7, dans lequel l'élément de commutation (T3, T4) est un transistor bipolaire ou un transistor à effet de champ.

9. Module de ventilation selon l'une des revendications 6 à 8, dans lequel une résistance de mesure (RS) est prévue en série sur l'unité de commutation pour la mesure du courant du moteur (2) du ventilateur.

10. Module de ventilation selon la revendication 9, dans lequel un condensateur (C4) est prévu pour lisser la tension (VI) aux bornes de la résistance.

11. Module de ventilation selon la revendication 10, dans lequel une résistance (R2) est prévue pour relier le condensateur (C4) à la résistance de mesure (RS).

12. Module de ventilation selon l'une des revendications 10 ou 11, dans lequel un autre élément de commutation (T5) par lequel le condensateur (C4) est raccordé à la résistance de mesure (RS) est prévu, l'élément de commutation (T4) et l'autre élément de commutation (T5) étant commandés ensemble.
